# EUROPEAN PATENT APPLICATION

(11) **EP 4 799 956 A1**
(43) Date of publication of application: **02.09.2026**
(21) Application number: 25160863.4
(22) Date of filing: 28.02.2025
(51) Int. Cl.: B65G 1/137, B65G 1/04

(54) **A CONTAINER**

(71) Applicant: AutoStore Technology AS, 5578 Nedre Vats (NO)
(72) Inventor: IVARJORD, Åsmund, 5578 Nedre Vats (NO)
(74) Representative: Kilburn & Strode LLP

(57) **Abstract**

The disclosure relates to a container for an automated storage and retrieval system. The container comprises a compartment for receiving an item to be stored, and an output device operable to provide picking and/or stocking information.

## Description

### TECHNICAL FIELD

The disclosure relates to a container for an automated storage and retrieval system. More particularly, it relates to a container which comprises an output device operable to provide picking and/or stocking information, a container access station configured to receive the container, an automated storage and retrieval system comprising the container access station and a method for using the container access station.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

At a port, a movement mechanism may move the containers between the grid and a location providing access to the containers. For example, ports can be used to enable access to a container by an operator for the purpose of picking and/or stocking operations in which items are removed from and/or positioned into containers. Containers may be sequentially transported to a port in order for their respective goods to be accessed in turn. Alternatively, or in addition, goods may be put into one or more of the containers at a port for storing in the grid. A port therefore provides an interface between the interior of the grid where containers are stored and the exterior of the grid where containers are accessed. Since the port provides access to locations where containers, robots (or parts thereof) and other equipment is moving, in an automated manner, a safety hatch can be provided as part of the port in order to prevent an operator at the port to coming into contact with moving components whilst the container is moved to/away from the port. The safety hatch may be opened so that an operator can access a container when the container is stationary at an access position of the port.

It can be useful to provide and/or display information which can facilitate the operator in their picking and/or stocking operations. For example, information may be displayed via a computer monitor located at a workstation near to the port. In general, it is desirable to display such information in a manner that is space-efficient and that facilitates a smooth workflow for the operator.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5a shows a perspective view of a container access station according to an implementation of the present disclosure, with a door in a closed position;
Fig. 5b shows a perspective view of the container access station of Fig. 5a with a door in an open position;
Fig. 6 shows a plan view of a container access station with a container according to an implementation of the present disclosure at a container handling compartment;
Figs. 7a-7c show schematic diagrams of example lighting arrangements; and
Fig. 8 shows a flowchart of a method for using a container access station.

### DETAILED DESCRIPTION

In overview and without limitation, the disclosure relates to a container for an automated storage and retrieval system, the container comprises a compartment for receiving an item to be stored, and an output device (e.g., a device which receives data and converts data into a form perceptible by an operator) operable to provide picking and/or stocking information. That is, the output device can be used to provide information to an operator relating to the removal of items or contents from the container, and/or to the placement of items or contents in the container. The output device thereby assists an operator in performing picking and/or stocking by means of a continued and guided human-machine interaction process, that process being the passage of goods into and out of a storage system (e.g. an automated storage and retrieval system) through the interaction between the system and a human operator. Conveying the picking and/or stocking information to an operator by the container itself optimises the space efficiency of the container access station. In particular, the need for a separate dedicated display area (e.g., a separated computer monitor or display panel) that would otherwise occupy additional space or would require a separate display surface is mitigated. Moreover, directly positioning the output device at the container provides a more efficient information communication means whereby the information conveyed can be easily correlated to the received container.

Optionally, the container may comprise a plurality of compartments, each compartment having a respective output device. Different picking and/or stocking instructions or other information may therefore be easily correlated to the different compartments of the container.

Optionally, the output device may comprise a lighting arrangement, such that picking and/or stocking information is clearly conveyed to an operator by means of lights and/or illumination indicating at least a portion of the container.

Optionally, the plurality of compartments may be separated by one or dividers, wherein at least one lighting arrangement is located on a divider. Different picking and/or stocking instructions or other information may therefore be easily correlated to the different compartments of the container.

Optionally, the lighting arrangement is positioned at or about an opening of the or each compartment. In this way, the picking and/or stocking instructions may be clearly visible to an operator without becoming blocked by the contents of the container.

Optionally, the lighting arrangement may comprise any one or more of: a display device for displaying picking and/or stocking information, an illumination device for illuminating a compartment to provide picking and/or stocking information, or an array of light sources which are individually addressable to provide picking and/or stocking information. The display device may comprise any suitable display device such as a screen (e.g., LCD, OLED display), an e-ink display or the like, and may be used to show any suitable display elements (such as numbers, images, words etc.) to convey picking and/or stocking information to an operator. The illumination device may be any suitable lighting device which can be used to illuminate a compartment. For example, information may be conveyed by the illumination device based on the colour of light (e.g., a first colour to indicate picking and a second colour to indicate packing), flashing or pulsing the illumination (e.g., a number of times corresponding with the number of items to be picked and/or stocked), or in any other suitable manner. The array of light sources may comprise any suitable light source, such as an array of LED lights or the like. For example, information may be conveyed by the array of light sources based on the colour of light (e.g., a first colour to indicate picking and a second colour to indicate packing), flashing or pulsing the light sources (e.g., a number of times corresponding with the number of items to be picked and/or stocked), activating a particular number of light sources (e.g., a number corresponding with the number of items to be picked and/or stocked), or in any other suitable manner.

Optionally, the output device may comprise at least one haptic motor operable or controllable to provide picking and/or stocking information. For example, a plurality of haptic motors may be provided, each haptic motor corresponding with a compartment of a storage container. The at least one haptic motor may thereby provide an alternative or additional means for guiding an operator during a picking and/or stocking operation, providing a tactile means by which information is conveyed to the operator. For example, vibrations at a given compartment may indicated that picking and/or stocking is to take place for that compartment. A number of pulses of vibration may be used to indicate the number of items to be picked and/or stocked, for example. Of course, the haptic motor may be used in any suitable manner.

Optionally, the container may comprise an interface for receiving power and/or control instructions from a container access station when the container is received therein. For example, the interface may comprise a spring-loaded pin connector such as a pogo pin connector, comprising one or more pogo pins. The interface may alternatively comprise a target contact for a spring-loaded pin connector. In this way, the container may be powered and/or operated when it is located at a container receiving positioned of a container access station, and control instructions for operating the lighting arrangement and, optionally, the haptic motor may be received from, or via, the container access station. For example, operation of the lighting arrangement and, optionally, the haptic motor, may be performed by the container access station or by a controller of an automated storage and retrieval system.

The disclosure also relates to a container access station configured to receive a container at a container handling compartment, the container access station comprising an access opening configured to provide access to a container when the container is received at the container handling compartment; and an interface for delivering power and/or control instructions for providing picking and/or stocking information to the container when the container is received at the container handling compartment. For example, the interface may comprise a spring-loaded pin connector such as a pogo pin connector, comprising one or more pogo pins. The interface may alternatively comprise a target contact for a spring-loaded pin connector. In this way, the container may be powered and/or operated when it is located at the container receiving positioned, and control instructions for operating the output device may be delivered to the container by, or via, the container access station. For example, operation of the output device may be performed by the container access station or by a controller of an automated storage and retrieval system. Conveying the picking and/or stocking information to an operator by the container itself optimises the space efficiency of the container access station. In particular, the need for a separate dedicated display area (e.g., a separated computer monitor or display panel) that would otherwise occupy additional space or would require a separate display surface is mitigated. Moreover, directly positioning the output device at the container provides a more efficient information communication means whereby the information conveyed can be easily correlated to the received container.

Optionally, the container access station may comprise weighing scales at the container handling compartment for determining the weight of a container. In this way, the container access station can track picking and/or stocking operations, for example to identify or confirm that picking and/or stocking operations are correctly performed according to the provided picking and/or stocking information. Tracking picking and/or stocking operations may allow errors to be flagged to an operator via the output device in any suitable manner. It will be appreciated that in other examples, any other suitable sensors may be used, such as cameras, which may track operations using computer vision or the like.

The disclosure also relates to an automated storage and retrieval system comprising a storage grid and a container access station.

The disclosure also relates to a method of using a container access station, the method comprising receiving a container at a container handling compartment, and delivering, to the container, power and/or control instructions for providing picking and/or stocking information. For example, the method may be performed by a controller as described herein.

Optionally, the method may further comprise a step of determining that a picking and/or stocking operation has been performed correctly by monitoring weighing scales at the container handling compartment. The picking and/or stocking information which is provided may be altered or changed responsive to the determination, for example. It will be appreciated that in other examples, any other suitable sensors may be used and monitored in a like manner, such as cameras, which may track operations using computer vision or the like.

### Automated storage and retrieval system overview

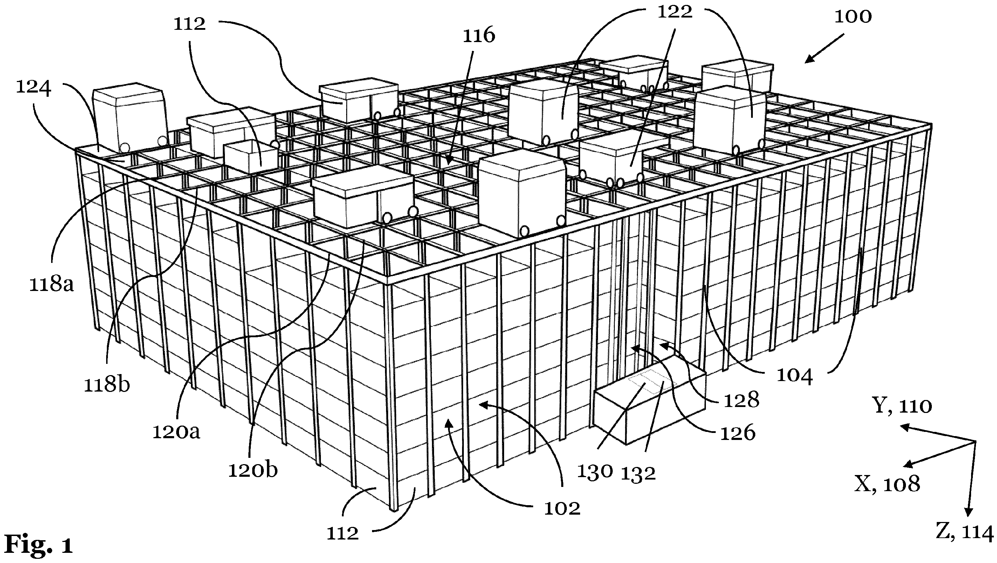

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

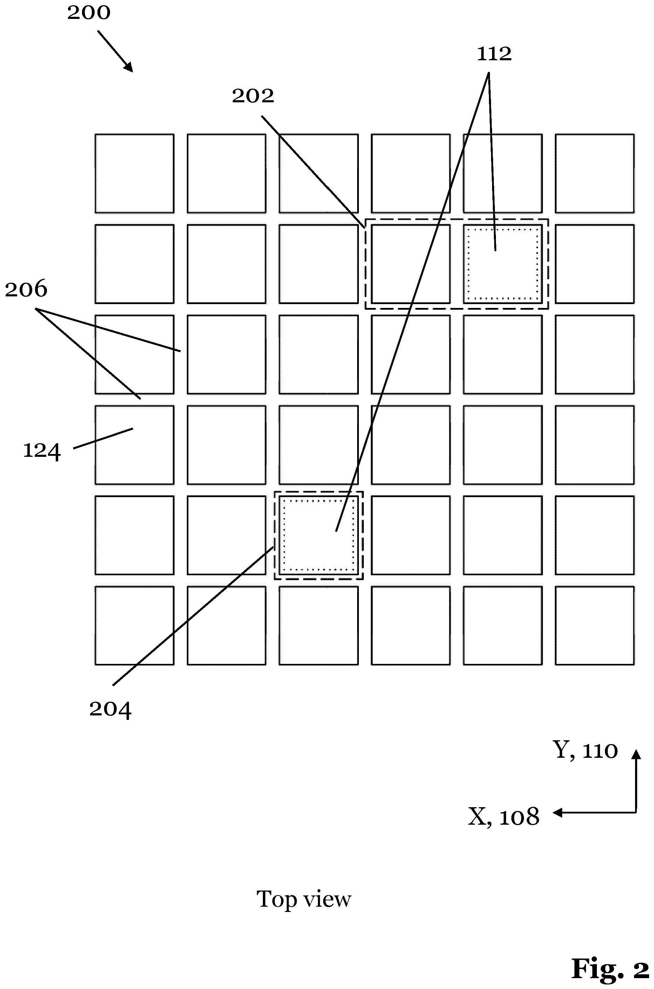

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

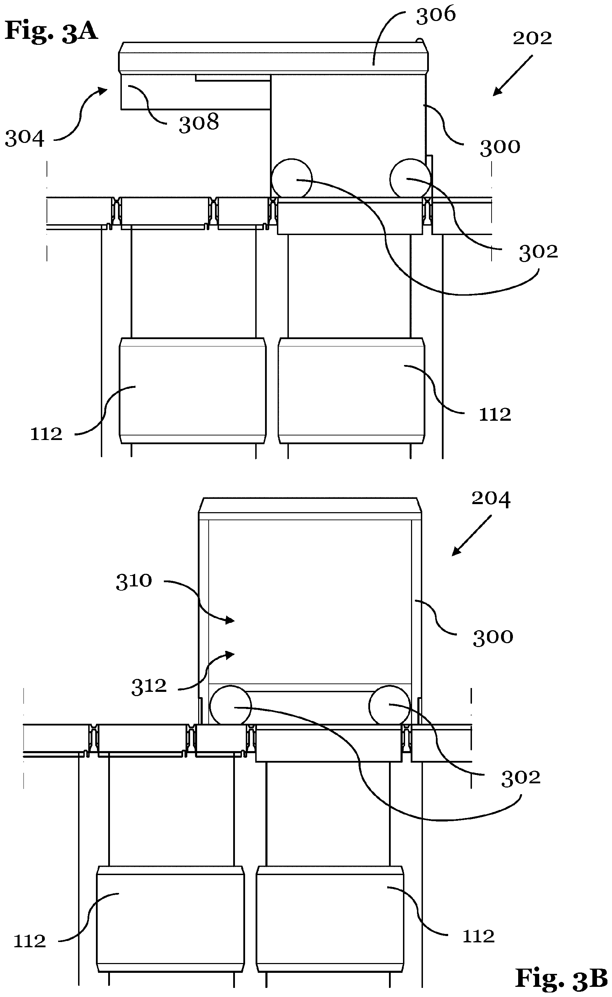

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

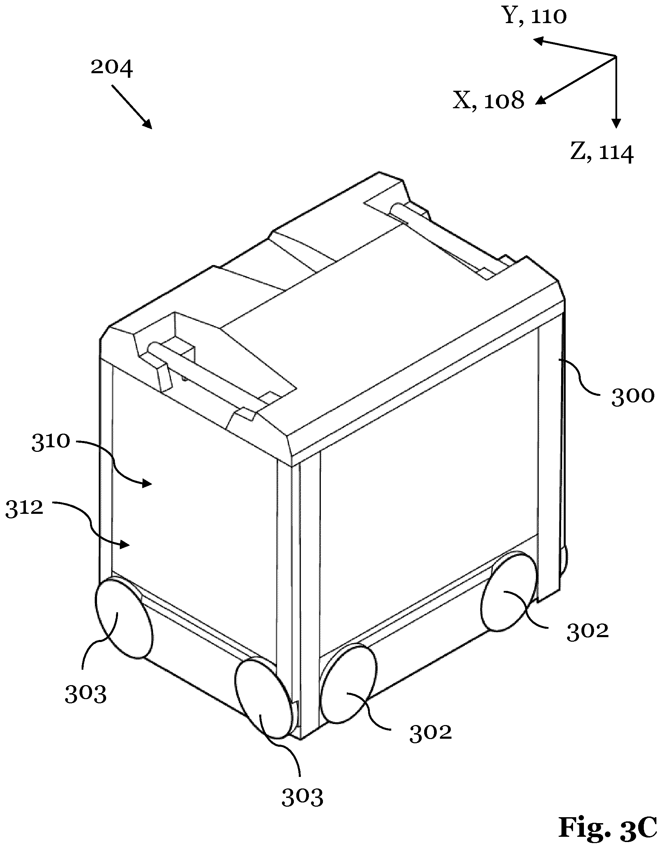

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

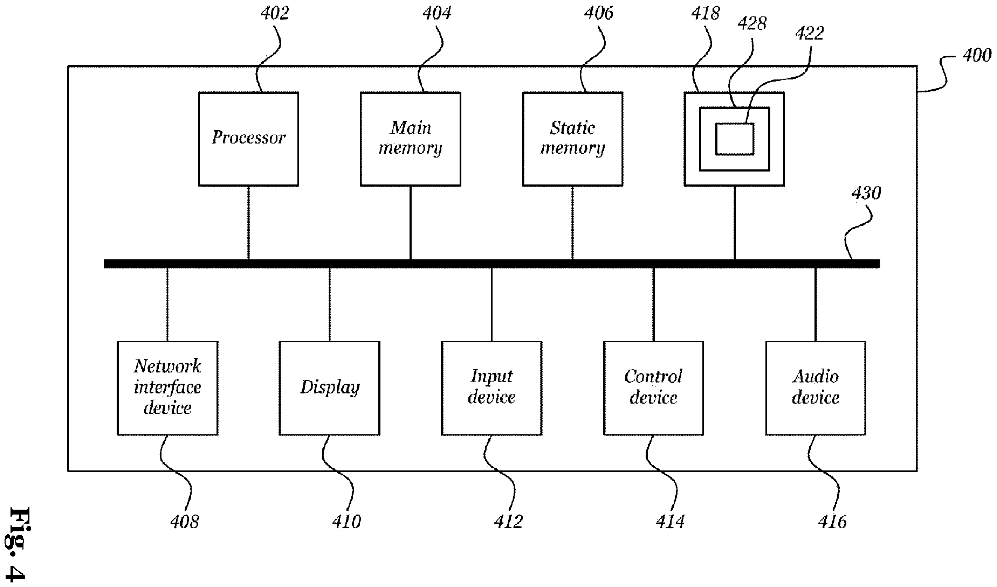

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position. The unique identifier may also be used to deliver appropriate power and/or control instructions to a container at a container access station to provide picking and/or stocking information, as described below. That is, relevant picking and/or stocking information may be associated with a unique identifier so that when the container is received at an access station the picking and/or stocking information can be provided to an operator.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Container access station

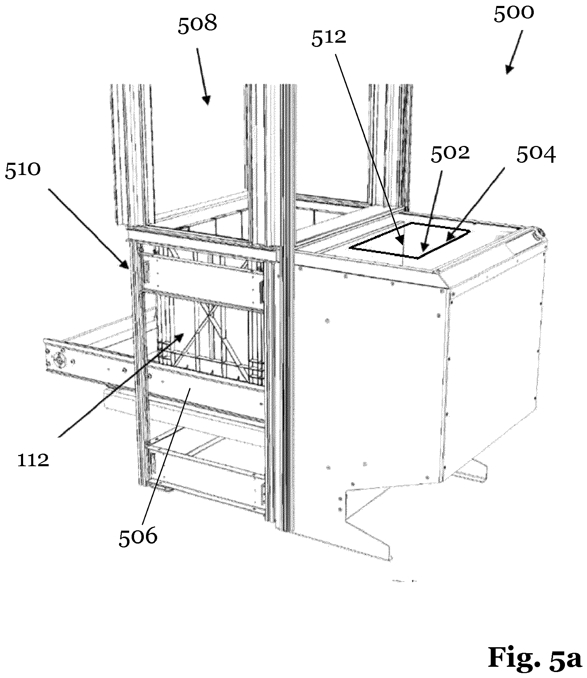

Referring to the embodiment shown in Fig. 5a, a container access station 500, also referred to as a port, is depicted coupled to a port column 508 of the storage grid. The container access station 500 may correspond to one of ports 130, 132 referred to in relation to Fig. 1. The port column 508 may correspond to one of port columns 126, 128 referred to in relation to Fig. 1. Fig. 5a also depicts a vertical frame member 510, which may correspond to vertical frame member 104 referred to in relation to Figure 1. In other words, the container access station 500 as depicted in Fig. 5a may be coupled to the grid 100 referred to in relation to Fig. 1 (referred to interchangeably as a storage grid 100 herein) via a port column 508/126. In general, the container access station 500 may be configured for coupling to the storage grid 100. In some examples, the container access station 500 and storage grid 100 may be integral.

As used herein, the container access station 500 may be described as a workstation, an access station, a container access station, a container access station or a picking station. In general, the container access station 500 is configured to receive a container, otherwise known as a bin 112 (e.g. from the automated storage and retrieval system) at a container-handling compartment, whereby when the container is positioned at the container-handling compartment of the container access station, an operator is able to access the container for interaction with the container itself (e.g. removing the container and/or reinserting a container), or for interaction with the goods stored therein. In some examples, the container access station 500 comprises a body, which may also be described as a frame, cabinet or a housing. The body may comprise a three-dimensional structure comprising one or more solid panels separating an interior of the container access station 500 from an exterior of the container access station 500. The body may prevent access to the interior of the container access station 500 (except through the access opening 502 when appropriate) and may therefore also enable safe operating of the container access station 500 by the operator. In other words, the body of the container access station may function as a protective barrier between operators and containers that are moving between the grid and the container handling compartment. In such examples, the interior of the container access station, defined by the solid panels, may comprise the container-handling compartment. In other words, a container access station may comprise a body defining a cavity which is configured to receive a container therein, such that the container may be accessed by an external operator.

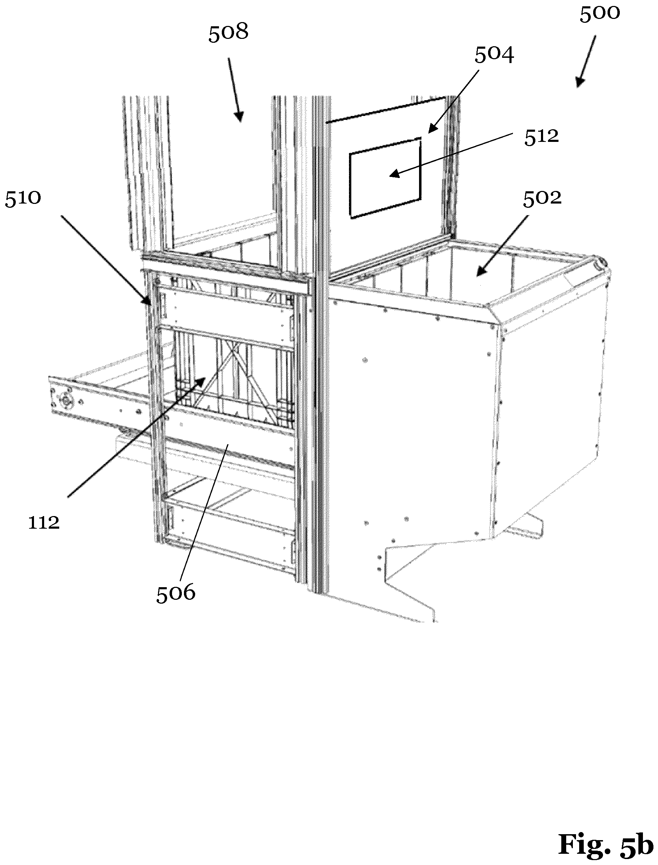

The container access station 500 comprises an opening 502, also referred to as an access opening 502 which is better shown in Fig. 5b. In Fig. 5a, the access opening 502 is concealed by a door 504 which is described in more detail below. The access opening 502 is configured to enable retrieval of goods therethrough from a container received in the container-handling compartment (e.g., a container received from the storage grid 100, via the port column 508, and received inside the body of the access station 500). In some embodiments, the entire container itself may be retrieved through the access opening 502. As described in more detail below, the access opening may be covered by a door or cover. When the access opening 502 is uncovered, an operator standing adjacent to the container access station 500 may retrieve goods from a container through the opening. In some embodiments, the access opening is defined by a cutout portion of a top-most panel of the body of the container access station. For example, the cutout may be square, rectangular, or any other shape. In some examples, the shape and size of the cutout (i.e., the shape and size of the access opening 502) corresponds to the shape and size of the containers that the station is configured to receive. In other examples, such as the one shown in Fig. 5b, the access opening may be defined by the side panels of the container access station. The tops of each side panel may comprise a lip or a border mounted thereon, which defines the opening 502 in the top of the container access station as shown in Fig. 5b. Preferably, the access opening is situated directly above the container handling compartment, such that when a container is received in the container handling compartment, the access opening provides direct access to said container.

Whilst the particular example depicted in Fig. 5a and 5b shows the access opening arranged at the top of the container access station, it would be appreciated that in other examples the access opening may be arranged at a side of the container access station. For example, referring again to Fig. 5a, the access opening may be on the rightmost panel as shown in the Figure (i.e., a front panel of the station 500). In other examples, the container, when received at the container-handling compartment, may be tilted with respect to one or more of the X-, Y- and Z-axes. In such examples, a panel of the access station that comprises the access opening may also be tilted in orientation, such that the orientation of the access opening corresponds to the opening of the container when the container is situated in the container handling compartment.

The container access station 500 further comprises a door 504 also referred to as a cover 504. As depicted in Fig. 5a, the door 504 covers, i.e., conceals, the access opening 502 when the door 504 is in a closed position. In the example shown in Figure 5a (in which the access opening is in a top-most panel of the container access station), the door is depicted as being located directly vertically above the access opening 502, however this is not essential for all embodiments. The door 504 may comprise a horizontal plane made of a solid material, preferably a transparent material such as glass or transparent plastic such as PMMA (polymethyl methacrylate) that extends substantially across the span of the access opening 502. A transparent door/cover 504 enables the interior of a container to be viewed therethrough. However, in this example, the door 504 comprises a window 512 enabling the interior of the container to be seen therethrough. The door 504 is configured to move between a closed position (also referred to as a closed location, first location or first position) in which access to any container located at the container handling compartment is obstructed (as seen in Fig. 5a), and an open position (also referred to as an open location, second position or second location) as seen in Fig. 5b, wherein access to a container located at the container handling compartment is enabled via the access opening 502. In other words, in the closed position, the access opening 502 may be fully covered by the door to prevent any access therethrough in the open position, the access opening is at least partially or wholly uncovered. In the specific example shown, the door 504 moves between the closed position and the open position by lifting the door 504 through an approximately 90° rotational arc from lying flat (along the XY-plane) into a substantially vertical position (aligned with the Z-axis). However, it should be understood that the door can be moved in any manner appropriate to transition it from a position in which it obstructs the access opening, the closed position, and a position in which it does not obstruct the access opening, an open position. Movement of the door may be automated by a drive system, comprising motors or any suitable drive mechanism that is capable of causing the door to move (translationally, rotationally, or otherwise) between an open and a closed position. Alternatively, transition between the closed and open positions may be effected manually by an operator. The door may be on hinges, sliding, or may be removable as a cover from the container access station. In some examples, the door may comprise multiple separate portions such as flaps or panels that collectively cover/uncover the access opening 502. As used herein, the door 504 may be referred to as a hatch, a shutter, cover or a safety hatch.

When the door 504 is moved to its open position, it may be possible to retrieve goods from (or place goods into) a container through the access opening 502, since the cover does not obstruct, block or cover the access opening 502.

In some examples, the container access station 500 may comprise a conveyor 506 as in Fig.5a. The conveyor is configured to move one or more containers between the storage grid 100 and the access opening 502. In other words, the conveyor 506 may be configured to move one or more containers between the port column 508 and the access opening 502. The conveyor 506 may comprise one or more belts each wrapped around two or more drums. One or more of the drums may be driven to rotate, for example by an (electric) motor. The drum(s) may be coupled to the belt through friction and optionally through one or more interlocking features to cause the belt to rotate around the drums. A container placed on the belt of the conveyor 506 may thus be moved in the Y-direction (towards or away from the container handling compartment) depending on whether the drum(s) is/are driven to rotate in a clockwise or anticlockwise direction.

The conveyor 506 may be described as being comprised in the container access station 500. When the container access station 500 is coupled to the storage grid 100, at least part of the conveyor 506 may also be disposed in, located in or comprised in the storage grid 100, for example beneath the port column 508 of the storage grid 100. A container, held by a robot (e.g., a robot 202 or 204) disposed on the rails at the top of the storage grid, may be lowered down (in the Z-direction) the port column 508 and deposited on the conveyor. When the container reaches the conveyor 506, the conveyor 506 may be used to translate the container to the container handling compartment. Conversely, when goods are placed into the container via the access opening, the conveyor 506 may be used to move the container from the container handling compartment to beneath the port column 508. A robot disposed on the rails at the top of the storage grid may then lift the container to be stored in the storage grid 100. The bottom of the port column 508 (i.e., the part of the port column 508 below the vertical height of the door 504), may be referred to as a put/get cell.

The container access station 500 may alternatively or additionally utilize means other than a conveyor 506 for moving a container between the container handling compartment within the container access station 500 and the port column 508. For example, a lift, carousel and/or drawer may be used by the container access station 500 to interface with the port column 508 in order to move a container between the put/get cell and a location beneath the access opening 502 of the container access station 500. That is to say a container access station with a conveyer 508, as in Fig.5a, is provided in detail as but one example embodiment and in order to provide the context of the container access station within a wider automated storage and retrieval system. As such, it is made clear that the container access station 500 of the present disclosure is not limited to embodiments comprising a conveyor 506 and may instead comprise any suitable means for transporting a container from one position (at which the container is received from the storage grid) to the container handling compartment. In yet further embodiments, the container access station does not in and of itself comprise any such means for transporting containers to a container handling compartment. In such embodiments, the container access station itself may be configured to interact with a separate conveyor (which may be a part of the storage grid 100) that is configured to transport a container to the container handling compartment.

The container access station may further comprise a camera (not pictured). The camera can be used to provide the video feed of the container in the container access station, as previously discussed. The camera may be used to provide information associated with the received container to a controller (described in more detail below) which can in turn be used to determine the information which is provided to an operator using an output device of the container, as described below. The camera may be used to determine picking and/or stocking operations being performed by the operator. The determined operations can be used to determine updated picking and/or stocking information as described in more detail below. In other examples, other types of sensor may be used to track picking and/or stocking operations which are performed, such as a weight sensor or the like.

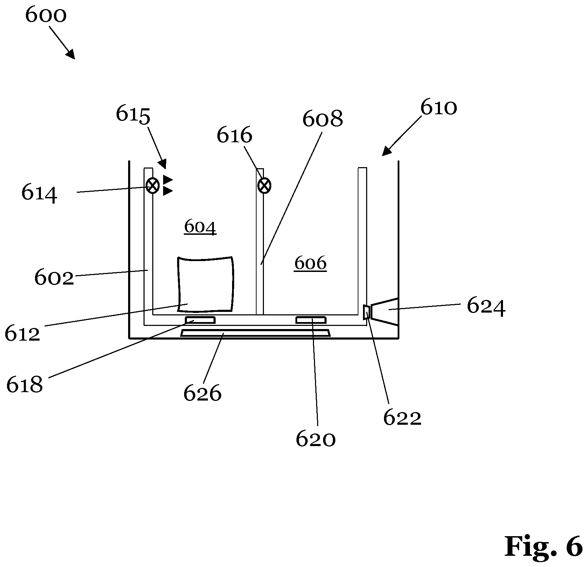

The top of each of the containers may be open and may be approximately the same size as the access opening 502. As depicted in Fig. 5a, size of the access opening in the Y-direction 502 may be approximately the same as size of the door 504 in the same direction. Similarly, the size of the access opening 502 in the X-direction may be approximately the same as the size of the door 504 in the same direction. In other words, the size of the access opening 502 and the door 504, may correspond or be approximately the same (in a horizontal, X-Y plane). As such, the door 504 is capable of blocking the access opening 502 when in the closed position 502 and at the same time does not carry excess weight (if it was otherwise oversized). In some examples (e.g., as described below with respect to Fig. 6), the access opening 602 may be larger than the container in at least one of the X-direction or Y-direction, with a correspondingly-sized door.

In some examples, the container access station 500 may further comprise a controller. The controller may be configured to control movement of the conveyor 506 (or any other system arranged to transport a container to the container handling compartment, if such a system, which is optional, is comprised within the container access station), control an output device of a container (e.g., a lighting arrangement and/or one or more haptic motors), to provide picking and/or stocking information, and/or may be configured to control movement of the door 504. The controller may comprise a computer readable medium, which is optionally non-transitory, storing instructions for implementing the control of any of the disclosed systems. For example, the controller may comprise instructions for generating and/or transmitting computer-executable instructions to one or more motors to effect movements of moveable components. The controller may further comprise instructions for controlling the provision of picking and/or stocking information via output device of a container. The controller may receive input from a camera and/or other sensors (e.g., weighing scales as described below) in order to determine the instructions to perform, such as in order to determine the information provided to an operator via the output device of a container. The controller may also identify a container received at the container handling compartment by a unique identifier belong to the container, which may be marked on the container using a computer-readable identifier (e.g., a barcode, quick-response code or radio-frequency identification tag). The controller may access a database of the processing system which stores, in association with the unique identifier, data such as the configuration and the content of each container, as well as the picking and/or stocking information which is to be provided.

In some examples, the container access station 500 may comprise separate controllers for movement of the conveyor 506, control of the output device of a container, and control of the door 504 respectively. In some examples, the controller is separate from the container access station and instead the container access station receives instructions directly from a controller 400 of the grid 100, as in Fig. 4, or another separate dedicated controller. In some examples, the controller can communicate with the output device of a container (e.g., a lighting arrangement and/or haptic motors) via a wired connection. Alternatively, the controller can communicate with the output device wirelessly.

The container access station 500 may comprise cable management means. The cable management means may efficiently route any cables belonging to components of the container access station. The cable management means can do so in a manner as to avoid cables from obstructing moving parts of the container access station.

As mentioned above, Fig. 5b shows an exemplary embodiment of the container access station 500 with the door 504 in an open position. It will be appreciated that if the door 504 is not obstructing the access opening 502, such that an operator can access a container located at the container handling compartment, it can be considered to be in an open position. Fig.5b illustrates an example open position in which the operator is able to access the bin though the access opening. Moving the door 504 to the open position may act as a trigger to activate the output device of a container at the container handling compartment to provide picking and/or stocking information. Similarly, moving the door 504 to the closed position shown in Fig. 5a may trigger the controller to deactivate the output device of a container at the container handling compartment.

Fig. 6 is a schematic drawing showing a cross-section view of a container access station 600, which may be generally equivalent to the container access station of Figs. 5a-5b. A door is omitted for clarity, but it will be appreciated that the door may be present. A container 602 is received at a container handling compartment within the access station 600 for a picking and/or stocking operation. The container 602 comprises a first compartment 604 and a second compartment 606, the compartments being separated by a divider 608. As shown in Fig. 6, the first compartment 604 contains contents 612 to be picked and the second compartment 606 is empty. Of course, it will be appreciated that the container 602 may comprise more than two compartments (e.g., 4 or 6 compartments) and only two are shown in the cross-section for clarity. In other examples, a container may not have any dividers, and may comprise a single compartment.

The container access station 600 comprises an access opening 610 to provide access to the container 602, allowing an operator to pick contents 606 from the container 602 or stock contents into the container 602. The access opening 604 may be closed by a lid as described above with respect to Figs. 5a-5b.

The container 602 comprises output devices which are operable to provide picking and/or stocking information to an operator. In this example, the output devices comprise a lighting arrangement, the lighting arrangement comprising a first illumination device 614 which is positioned on a sidewall of the container 602 for illuminating the first compartment 604, and a second illumination device 616 arranged on the divider 608 for illuminating the second compartment 606. Picking and/or stocking information related to each compartment may thereby be provided to an operator by operating the illuminating devices 614, 616. Each of the illuminating devices 614, 616 is positioned at the opening of the respective compartment to ensure that illumination is not blocked by any contents of the container 602. handling compartment It will be appreciated that the lighting arrangement can comprise any number or type of lighting means and those provided in Fig. 6 are exemplary only and not intended to be limiting by number, size, shape of the lighting arrangement, or by the information conveyed or manner in which information is conveyed.

In this example, the first illuminating device 614 is configured to illuminate the first compartment 604 to provide picking and/or stocking information related to the first compartment 604, and the second illuminating device 616 is configured to illuminate the second compartment 606 to provide picking and/or stocking information related to the second compartment 606. As shown in Fig. 6, arrows 615 show that only the first illuminating device 614 is providing illumination, thereby illuminating the first compartment 604 and providing information to an operator that the contents 612 should be picked from the first compartment 604 of the container 602. Stocking information may be provided in a similar manner. For example, illuminating the second compartment 606 by the second illuminating device 616 may inform an operator that contents is to be stocked in the second compartment 606 of the container 602. Picking and stocking instructions may be differentiated by the colour of light, for example. A quantity of goods to be picked and/or stocked may be indicated by a number of flashes of light, for example. Of course, any suitable method of operating the lighting arrangement to guide user interaction with the container access station may be considered.

The output devices further comprise a first haptic motor 618 associated with the first compartment 604, and a second haptic motor 620 associated with the second compartment 606. In particular, each haptic motor 618, 620 is located in a base of the container below the respective compartment. The haptic motors 618, 620 may thereby be controlled to vibrate and provide picking and/or stocking information in relation to each respective compartment. For example, the haptic motors 618 may generate vibrations to guide an operator to picking the contents 612 from the first compartment 604. The vibrations generated by each haptic motor 618, 620 may be modulated to provide different picking and/or stocking information. For example, a strength or intensity of the vibrations may be used to differentiate between picking and stocking, and a number of pulses of vibration may indicate the quantity of goods to be picked or stocked. Of course, it will be appreciated that any suitable method of operating the haptic motors 618, 620 to guide user interaction with the container access station may be considered.

In order to provide power to the lighting arrangement and the haptic motors 618, 620, as well as to send control instructions to those components, the container 602 comprises a first interface 622 and the access station comprises a second interface 624 arranged to connect with the first interface 622 when the container 602 is at the container handling compartment. For example, the first interface 622 comprises one or more spring-loaded pin connectors (e.g., pogo pins) and the second interface 624 comprises corresponding target contacts.

The access station further comprises weighing scales 626 at the container handling compartment for determining the weight of the container 602. The weighing scales 626 may thereby be used to track picking and/or stocking operations performed by an operator, determine whether those operations have been performed correctly, and adjust the information provided by the lighting arrangement and haptic motors 618, 620 accordingly. For example, if an error in picking and/or stocking occurs, the lighting arrangement and/or haptic motors 618, 620 may be controlled to indicate the error to the operator and provide further picking and/or stocking information to rectify the error.

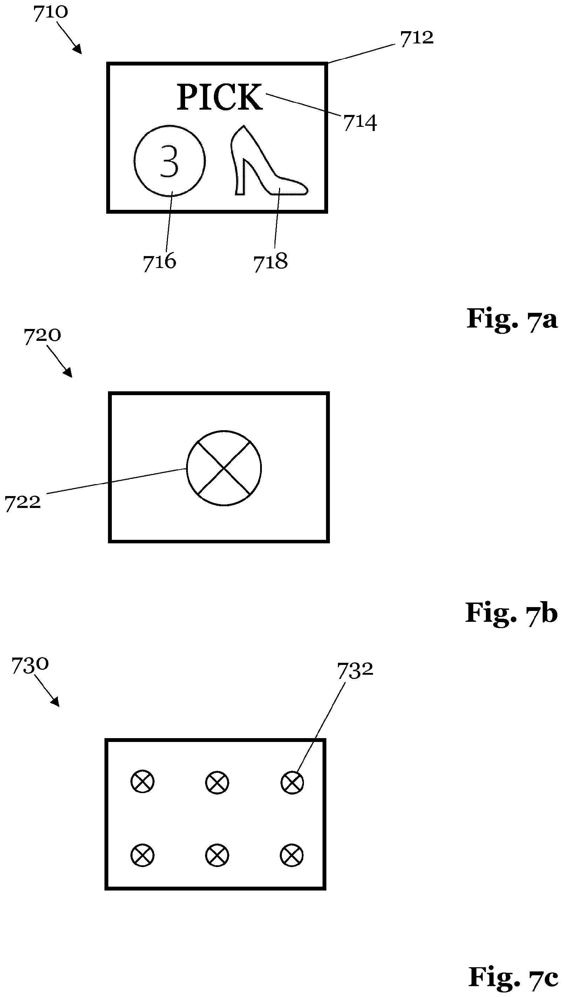

Fig. 7a is a schematic drawing of a first example lighting arrangement 710, wherein the lighting arrangement 710 comprises a display device 712 for displaying picking and/or stocking information. Such a display device 712 may be provided for each compartment of a container. The display device 712 may comprise any suitable device such as an LCD screen, an e-ink display etc. The display device 712 is controllable to show display elements which provide picking and/or stocking information. A first display element 714 shows that the operation to be performed is a picking operation, and may be changed to show "STOCK" if the operation is a stocking operation, for example. A second display element 716 shows the number of items to be picked from the container, in this example 4, and a third display element 718 informs the operator as to what items to perform the operation on, in this example shoes. That is, in the example shown in Fig. 7a, information is provided to an operator to convey that 3 shoes are to be picked from the container. The display elements 713, 716, 718 may be provided in any suitable manner to convey appropriate picking and/or stocking information as required, and the display elements shown in Fig. 7a are exemplary only. Any suitable number or type of display elements may be considered. The display elements may be updated in real time based on the operations performed by the operator, for example based on tracking data obtained from a camera or other sensor, such as weighing scales.

Fig. 7b is a schematic drawing of a second example lighting arrangement 720, wherein the lighting arrangement 720 comprises an illumination device 722 for illuminating a compartment of a container to provide picking and/or stocking information. Such an illumination device 722 may be provided for each compartment of a container. In this example, the illumination device 722 is a light source bright enough to illuminate the compartment (and any contents of the compartment) to be visible by an operator in order to convey the picking and/or stocking information. For example, the illumination device 722 may be a high power LED or the like. The illumination device 722 may be operated in any suitable manner to convey picking and/or stocking information. For example, illuminating a compartment may indicate that picking and/or stocking is to take place in relation to that compartment. A colour of the illumination may indicate picking or stocking, for example, and a number of pulses or flashes may indicate the number of items to be picked or stocked. Of course, any other suitable method of conveying picking and/or stocking information may be considered.

Fig. 7c is a schematic drawing of a third lighting arrangement 730, wherein the lighting arrangement 730 comprises an array of light sources 732 which are individually addressable to provide picking and/or stocking information. Such an array of light sources 732 may be provided for each compartment of a container. In this example, the lighting arrangement 730 comprises six light sources 732 arranged in two rows of three light sources 732, but it will be appreciated that any suitable number and arrangement of light sources may be used in other examples. The light sources 732 may be operated in any suitable manner to convey picking and/or stocking information. For example, a number of lights which are illuminated on a top row may indicate a number of items to be picked, and a number of lights which are illuminated on a bottom row may indicate a number of items to be stocked. Each row of light sources 732 may provide a different colour light to enable easy differentiation of picking or stocking information. Of course, any other suitable method of conveying picking and/or stocking information may be considered.

### Method for operating an access station coupled to a storage grid

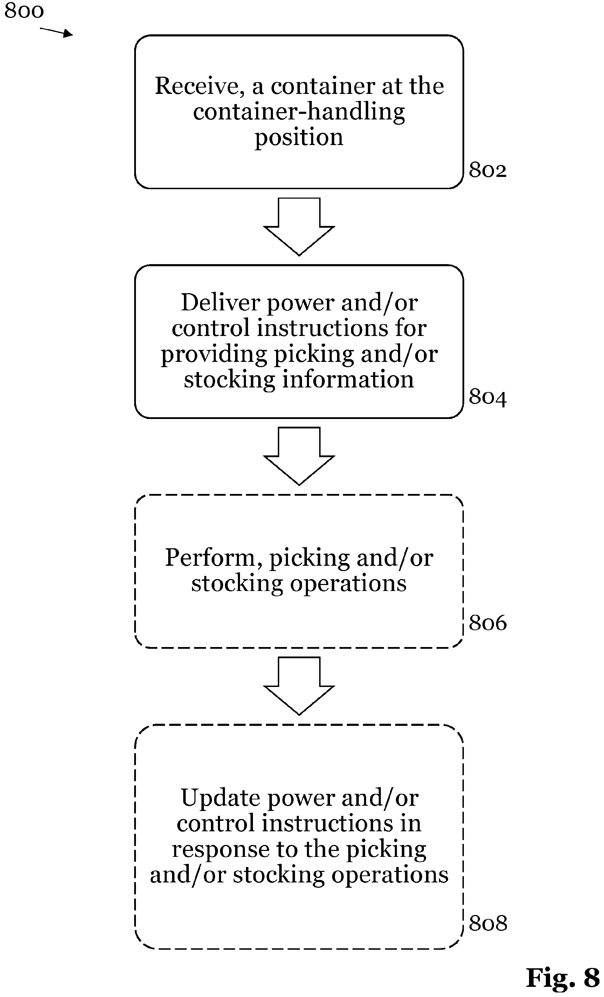

Fig.8 shows a method 800 for a container access station, such as the container access station 500, 600 of Figs. 5a-b, 6.

At step 802, the container access station receives a container at the container-handling compartment. The container access station can receive the container using any appropriate means such as, but not limited to, a conveyer, a carousel, a drawer, a lift, a container handling robot, an operator and/or a trolley. The container handling compartment may be directly below (or otherwise aligned in any other suitable direction with) an access opening of the container access station such that the container or goods stored therein can be accessed through the access opening.

At step 804, the container access station delivers, to the container, control instructions for providing picking and/or stocking information by an output device of the container. The step 804 may include control instructions for providing picking and/or stocking information by operating a lighting arrangement, and/or one or more haptic motors of the container. For example, the container may comprise a number of compartments (e.g., as shown in Fig. 6), and the control instructions may comprise instructions to indicate a particular compartment may to show that contents should be removed from or placed into that compartment. The number of contents to be removed from or placed into the compartment may also be indicated, for example by a number of flashes of the lighting arrangement and/or by pulses of the haptic motor.

Step 804 may comprise determining the container which is received at the container handling compartment. For example, this may be based on the unique identifier of the container, which may be marked on the container using a computer-readable identifier (e.g., a barcode, quick-response code or radio-frequency identification tag). Information relevant to the picking and/or stocking operation, for example information regarding the contents of the container, the number of compartments of the container etc., may be retrieved from a database of the processing system and may be used to determine the control instructions for picking and/or stocking information which are delivered to the container.

Optionally, at step 806, the container access station can be used to perform picking and/or stocking operations. In picking and/or stocking operations the access opening can be used to move or add items from the container received in the container handling compartment. As part of method step 806, a door for covering the access opening may be moved to an open position (if the door is not already in an open position). The door can be moved into any position in which it does not obstruct the access opening to be considered to be in an open position. The door may be moved using automated means provided as part of the container access station, such as motors or any other automated drive system. The door may also be manually moved between an open and closed position by an operator. In order to perform the pick and/or stocking operation the door must be in an open position wherein the access opening is at least partially uncovered. The picking and/or stocking operations are informed and facilitated by the output device of the container. The picking and/or stocking operations can be performed by an operator as part of a guided human-machine interaction, the assistive guidance being delivered using the output device.

Optionally, at step 808, the container access station can update the power and/or control instructions to provide, using the lighting arrangement and, optionally, haptic motors, updated picking and/or stocking information in response to the picking and/or stocking operations performed at step 806. The updated picking and/or stocking information can comprise updated instructions and/or information in response to the operations and/or actions performed by the operator in step 806. For example, the updates can be based on data received by a camera or other sensor, such as a weight sensor, which captures and determines the action performed by the operator at step 806. Updating the information and/or instructions can comprise updating the output device to convey to the operator a new instruction, such as an updated quantity, item type, or operation to perform. The updated information may comprise an error notification to advise the user to undo an action taken at step 806. By updating the information which is conveyed by the output device the operator is provided a continuous and guided human-interaction with the container access station in order to provide real time assistance to their picking and/or stocking operations. Method steps 806 and 808 can be repeatedly performed until a picking and/or stocking process associated with a container is completed.

### Penultimate comments

It is to be understood that within the scope of the present disclosure, both the container access station 500, 600 and the method 800 for a container access station 500, 600 described above can be provided as part of an automated storage and retrieval system, such as the automated storage and retrieval system described in reference to Figs. 1-4.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A container for an automated storage and retrieval system, the container comprising:
a compartment for receiving an item to be stored, and
an output device operable to provide picking and/or stocking information.

2. The container of claim 1, wherein the container comprises a plurality of compartments, each compartment having a respective output device.

3. The container of claim 1 or claim 2, wherein the output device comprises a lighting arrangement.

4. The container of claim 3, wherein the container comprises a plurality of compartments separated by one or more dividers, wherein at least one lighting arrangement is located on a divider.

5. The container of claim 3 or 4, wherein the lighting arrangement is positioned at or about an opening of the or each compartment.

6. The container of any one of claims 3 to 5, wherein the lighting arrangement comprises any one or more of:
a display device for displaying picking and/or stocking information,
an illumination device for illuminating a compartment to provide picking and/or stocking information, or
an array of light sources which are individually addressable to provide picking and/or stocking information.

7. The container of any preceding claim, wherein the output device comprises a haptic motor operable to provide picking and/or stocking information by generating vibrations.

8. The container of claim 7, wherein the container comprises a plurality of compartments and a haptic motor associated with each compartment.

9. The container of any preceding claim, wherein the container comprises an interface for receiving power and/or control instructions from a container access station when the container is received therein.

10. The container of claim 9, wherein the interface comprises a spring-loaded pin connector, or a target contact for a spring-loaded pin connector.

11. A container access station configured to receive a container according to any one of claims 1 to 9 at a container handling compartment, the container access station comprising:
an access opening configured to provide access to a container when the container is received at the container handling compartment; and
an interface for delivering power and/or control instructions for providing picking and/or stocking information to the container when the container is received at the container handling compartment.

12. The container access station of claim 10, wherein the interface comprises a spring-loaded pin connector, or a target contact for a spring-loaded pin connector.

13. The container access station of claim 10, wherein the container access station comprises weighing scales at the container handling compartment for determining the weight of a container.

14. An automated storage and retrieval system comprising a storage grid and a container access station according to claim 11 or 12.

15. A method of using a container access station according to any one of claims 11 to 13, the method comprising:
receiving a container at the container handling compartment; and
delivering, to the container, power and/or control instructions for providing picking and/or stocking information.
